# EUROPÄISCHE PATENTSCHRIFT

(11) **EP 2 604 480 B1**
(45) Veröffentlichungstag und Bekanntmachung des Hinweises auf die Patenterteilung: **26.03.2014**
(21) Anmeldenummer: 12006733.5
(22) Anmeldetag: 26.09.2012
(51) Int. Cl.: B60R 25/021

(54) **Mechanische Lenkverriegelung**
Mechanical steering lock
Verrouillage de direction mécanique

(30) Priorität: 16.12.2011 DE 102011121430
(43) Veröffentlichungstag der Anmeldung: 19.06.2013
(73) Patentinhaber: Huf Hülsbeck & Fürst GmbH & Co. KG, 42551 Velbert (DE)
(72) Erfinder: Trischberger, Werner, 85229 Langenpettenbach (DE)
(74) Vertreter: Schäfer, Matthias W.

(56) Entgegenhaltungen:
- DE-A1- 1 780 228
- US-B1- 6 354 117

## Beschreibung

### Gebiet der Erfindung

Die Erfindung betrifft eine mechanische Lenkverriegelung für ein Fahrzeug mit einem von einem Schlüssel betätigbaren Schließzylinder gemäß des Oberbegriffs des Anspruch 1.

### Stand der Technik

Aus dem Stand der Technik sind mechanische Lenkverriegelungen mit einem von einem Schlüssel betätigbaren Schließzylinder und einem durch einen Kopfstein gebildeten Verriegelungsschutz bei entsperrter Lenkverriegelung bekannt. Hierbei wird der Drehwinkel eines Schließzylinders allein durch die maximale Baubreite des Kopfsteins in Relation zum Durchmesser eines den Kopfstein führenden Schließzylinders begrenzt. Ein erweiterter Verdrehwinkel des Schließzylinders scheitert an den mechanischen Vorgaben für eine sichere Führung des Kopfsteins innerhalb des Schließzylinders.

So ist aus der Offenlegungsschrift DE 1 780 228 A1 ein Lenkspindelverschluß mit einem patronenförmigen Gehäuse bekannt, in welchem der Schließzylinder angeordnet und der in Achsrichtung des Gehäuses verschiebliche Sperr-Riegel geführt ist. Hierbei weist das Gehäuse einen rückwärtigen im Querschnitt segmentförmigen Vorsprung mit einer Führungsnut für den Sperr-Riegel auf. Des Weiteren ergänzt sich das im Querschnitt ebenfalls segmentförmig ausgebildete Schaltergehäuse zusammen mit dem Vorsprung zur Patronenform.

Der Erfindung liegt daher die Aufgabe zugrunde, eine mechanische Lenkverriegelung für ein Fahrzeug zur Verfügung zu stellen, welche einen großen Drehwinkel des Schließzylinders von 85° und mehr ermöglicht, kostengünstig und durch hohe Toleranzen mechanisch stabil zu fertigen ist und einen Schutz gegen unabsichtliches Verriegeln bietet

Diese Aufgabe wird durch eine mechanische Lenkverriegelung für ein Fahrzeug mit den Merkmalen des Anspruchs 1 gelöst. Vorteilhafte Ausführungsformen und Weiterbildungen der Erfindung werden in den Unteransprüchen beschrieben.

Dazu wird erfindungsgemäß eine mechanische Lenkverriegelung für ein Fahrzeug zur Verfügung gestellt, welche folgendes aufweist:
- einen von einem Schlüssel betätigbaren Schließzylinder mit einem Kopfstein und einer Kopfsteinverlängerung, beispielsweise aus Druckgussmaterial hergestellt,
- einen Gegenhalter mit einer Gegenhalternase, beispielsweise aus Druckguss- oder Spritzgussmaterial hergestellt,
- ein Nockenrad mit einer auf einer Außenfläche ausgebildeten Hubkurve, beispielsweise aus Druckguss- oder Spritzgussmaterial hergestellt, und
- eine Hubstange, die zwischen einer Sperrstellung zur Sperrung einer Lenkspindel und einer Freigabestellung zur Freigabe der Lenkspindel in einer Hubachse beweglich ist, beispielsweise aus Stahl, und/oder Druckgussmaterial hergestellt.

Um einen Verriegelungsschutz vor Schlüsselabzug für große Drehwinkel des Schließzylinders von mehr als 85°, insbesondere bis zu 155° zur Verfügung zu stellen, ist die starre Kopfsteinverlängerung vorgesehen, die zusammen mit dem Kopfstein einen Verriegelungsschutz bildet.

Vorteilhafterweise ist bei der mechanischen Lenkverriegelung die Kopfsteinverlängerung an den Schließzylinder angrenzend und mit diesem einstückig oder starr verbunden. Durch diese integrale Ausbildung wird ein weiteres Bauteil vermieden und gleichzeitig, durch die daraus resultierende Spielfreiheit, die Funktionssicherheit bei diesem sicherheitsrelevanten Bauteil erhöht.

Nach einer weiteren vorteilhaften Ausführungsform überdeckt die Kopfsteinverlängerung einen Bogenwinkel von mehr als 55° und bildet zusammen mit dem Kopfstein und dem Gegenhalter einen Verriegelungsschutz von mehr als 85°, vorzugsweise 100°, besonders bevorzugt 155°

Die Kopfsteinverlängerung weist vorteilhafterweise einen sich radial erstreckenden kegel- oder keilförmigen Querschnitt auf. Mit dieser geometrischen Ausbildung wird ein Überspringen der Gegenhalternase von der hinteren Kopfsteinverlängerungskontaktfläche auf die vordere Kopfsteinverlängerungskontaktfläche während der Entriegelung verhindert.

Vorteilhafterweise wird der Kopfstein im Wesentlichen senkrecht zur Schließzylinderachse angeordnet. Damit wird der Kopfstein bei nicht eingestecktem Schlüssel in einer Position nahe an der Schließzylinderlängsachse aufgenommen. Hiermit ist der Verriegelungsschutz deaktiviert und die Lenksäule drehfest verriegelt.

Die Hubstange wird vorteilhafterweise beim Entriegeln von der Hubkurve des Nockenrads im Wesentlichen parallel zur Schließzylinderachse, zwischen einer Sperrstellung zur Sperrung einer Lenkspindel und einer Freigabestellung zur Freigabe der Lenkspindel, bewegt. Dabei drückt die Hubstange den Gegenhalter durch eine zwischen der Hubstange und dem Gegenhalter angeordnete Schraubendruckfeder gegen eine hintere Kopfsteinverlängerungskontaktfläche der Kopfsteinverlängerung. Dies ermöglicht eine kompakte Bauform der mechanischen Lenkverriegelung.

Vorteilhafterweise wird der Verriegelungsschutz durch formschlüssige Eingriffe gebildet. Hierfür wird vor dem Erreichen der dritten Raststelle eine unabsichtliche Verriegelung durch das Blockieren der Hubstange verhindert, in dem die Gegenhalternase des Gegenhalters, aufgrund der Druckspannung der Schraubendruckfeder, die von der Hubkurve des Nockenrads über die Hubstange an der Schraubendruckfeder aufgebaut wurde, vor die Kopfsteinverlängerung geschoben wird und die vordere Kopfsteinverlängerungskontaktfläche gegenüber der zweiten Kontaktfläche auf der Gegenhalternase zum Eingriff kommt.

Die Lenkverriegelung weist vorteilhafterweise ein Gehäuse auf, wobei in dem Gehäuse im Wesentlichen angeordnet sind: der Schließzylinder mit der Kopfsteinverlängerung, der Kopfstein, der Gegenhalter, das Nockenrad, die Hubstange und die Schraubendruckfeder.

### Kurze Beschreibung der Zeichnungen

Nachfolgend wird die Erfindung anhand eines Ausführungsbeispiels zusammen mit den beigefügten Zeichnungen erläutert. Dazu zeigt:
Figur 1 eine perspektivische Explosionsansicht einer mechanischen Lenkverriegelung gemäß einer bevorzugten Ausführungsform der vorliegenden Erfindung;
Figur 2 eine perspektivische Detailansicht der Einbaulage eines Gegenhalters in einem Gehäuse der mechanischen Lenkverriegelung gemäß einer bevorzugten Ausführungsform der vorliegenden Erfindung;
Figur 3 eine perspektivische Ansicht des Gehäuses der mechanischen Lenkverriegelung gemäß einer bevorzugten Ausführungsform der vorliegenden Erfindung;
Figur 4 eine Draufsicht auf die mechanische Lenkverriegelung in einer ersten Rastposition bei einem Drehwinkel des Schließzylinders von 0°, gemäß einer bevorzugten Ausführungsform der vorliegenden Erfindung;
Figur 5 eine Draufsicht auf die mechanische Lenkverriegelung bei einem Drehwinkel des Schließzylinders von 45°0, gemäß einer bevorzugten Ausführungsform der vorliegenden Erfindung;
Figur 6 eine perspektivische Ansicht der mechanischen Lenkverriegelung bei einem Drehwinkel des Schließzylinders von ca. 100°, gemäß einer bevorzugten Ausführungsform der vorliegenden Erfindung;
Figur 7 eine Draufsicht auf ein Nockenrad und eine Hubstange wiederum bei einem Drehwinkel des Schließzylinders von ca. 100°, gemäß einer bevorzugten Ausführungsform der vorliegenden Erfindung;
Figur 8 eine perspektivische Ansicht der mechanischen Lenkverriegelung bei einem Drehwinkel des Schließzylinders von 90°, beim Zurückdrehen von 120° oder von mehr als 100°, gemäß einer bevorzugtenAusführungsform der vorliegenden Erfindung;
Figur 9 eine perspektivische Detailansicht des Nockenrads und der Hubstange bei einem Drehwinkel des Schließzylinders von 90°, beim Zurückdrehen von 120° oder von mehr als 100°, gemäß einer bevorzugten Ausführungsform der vorliegenden Erfindung;
Figur 10 eine weitere perspektivische Detailansicht des Nockenrads und der Hubstange bei einem Drehwinkel des Schließzylinders von 90°, beim Zurückdrehen von 120° oder von mehr als 100°, gemäß einer bevorzugten Ausführungsform der vorliegenden Erfindung;
Figur 11 eine Schnittdarstellung der mechanischen Lenkverriegelung in der ersten Rastposition bei einem Drehwinkel des Schließzylinders von 0° und noch nicht vollständig entferntem Schlüssel, gemäß einer bevorzugten Ausführungsform der vorliegenden Erfindung und
Figur 12 eine schematische Darstellung der Raststellungen des Schließzylinders, gemäß einer bevorzugten Ausführungsform der vorliegenden Erfindung.

Nachfolgend beziehen sich Richtungsangaben auf die Zeichnungsebene bzw. auf die Schließzylinderlängsachse sofern sich aus dem Text nichts anderes ergibt.

### Detaillierte Beschreibung bevorzugter Ausführungsformen

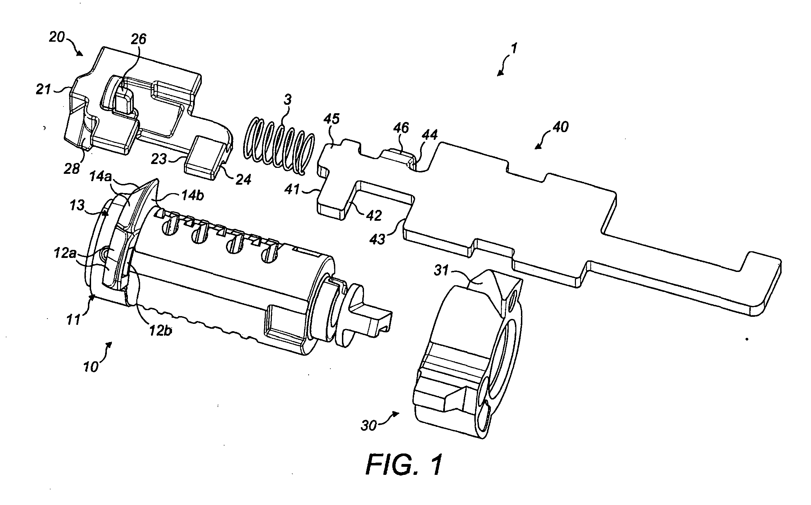

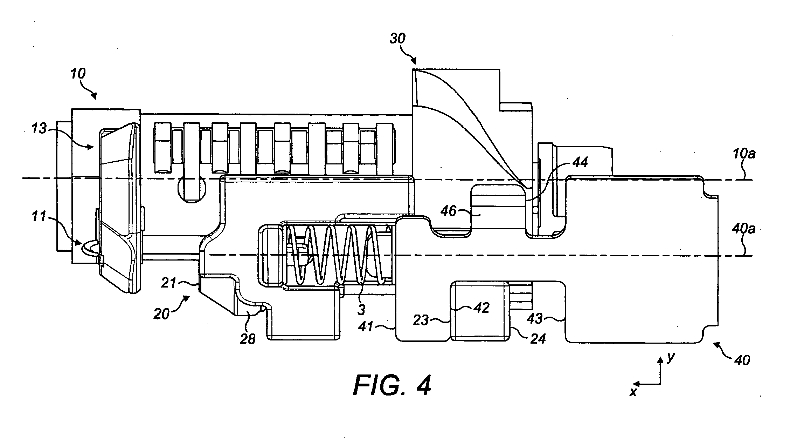

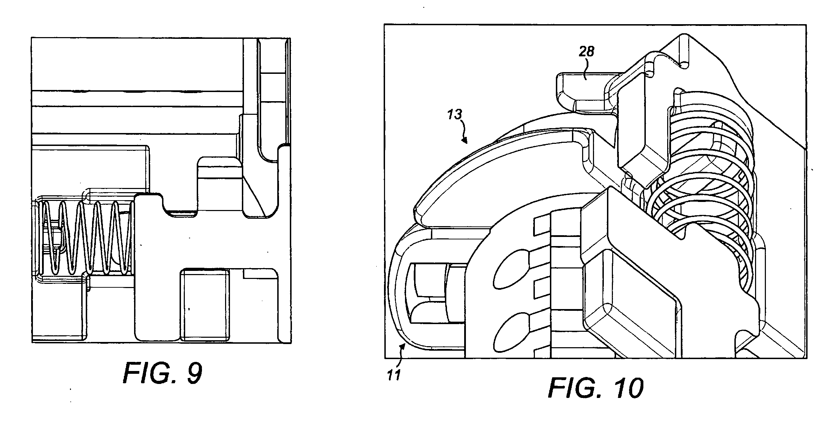

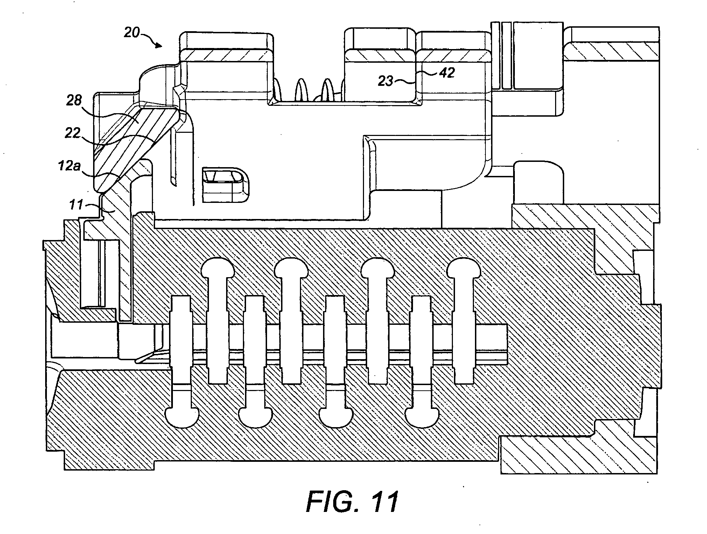

Die Figuren 1 bis 12 zeigen eine bevorzugte Ausführungsform einer mechanischen Lenkverriegelung gemäß der vorliegenden Erfindung. Diese mechanische Lenkverriegelung 1 weist einen von einem Schlüssel betätigbaren Schließzylinder 10 mit einer Kopfsteinverlängerung 13 und einem Kopfstein 11, einen Gegenhalter 20 mit einer Gegenhalternase 28, einer Schraubendruckfeder 3, einem Nockenrad 30, einer Hubstange 40 und einem Gehäuse 2 auf. Stirnseitig ist der Schließzylinder 10 mit einer Öffnung für einen axialen Schlüsselkanal 10b versehenen, in den der Schlüssel einsteckbar ist. Des Weiteren ist im vorderen Abschnitt des Schließzylinders 10, die starre Kopfsteinverlängerung 13 ausgebildet. Die Kopfsteinverlängerung 13 erstreckt sich im Wesentlichen radial ringsegmentartig und hat einen im Wesentlichen keilförmigen Querschnitt. Ferner ist an der Kopfsteinverlängerung 13 eine stirnseitige, vordere Kopfsteinverlängerungskontaktfläche 14a überwiegend schräg abfallend, und eine der Stirnseite abgewandte, hintere Kopfsteinverlängerungskontaktfläche 14b, im Wesentlichen senkrecht zur Schließzylinderlängsachse 10a, ausgebildet. Der Schließzylinder 10 und die Kopfsteinverlängerung 13 sind als einstückiges, starr verbundenes Bauteil ausgeführt, welches im vorliegenden Ausführungsbeispiel im Spritzgussverfahren aus einer metallischen Legierung hergestellt wird. Angrenzend an die Kopfsteinverlängerung 13 ist im Uhrzeigersinn, bei stirnseitiger Draufsicht auf den Schließzylinder 10, eine im Wesentlichen rechteckförmige Öffnung durch den Schließzylinder 10, im Wesentlichen senkrecht zur Schließzylinderlängsachse 10a, ausgebildet.

Diese Öffnung und/oder Führung dient zur Aufnahme und Führung eines Kopfsteines 11, der im Wesentlichen den gleichen keilförmigen Querschnitt wie die Kopfsteinverlängerung 13 aufweist und im Wesentlichen radial segmentartig ausgebildet ist. Bei dem Kopfstein 11 sind eine stirnseitige, vordere Kopfsteinkontaktfläche 12a überwiegend schräg abfallend und eine der Stirnseite abgewandte, hintere Kopfsteinkontaktfläche 12b im Wesentlichen senkrecht zur Schließzylinderlängsachse 10a ausgebildet.

Innerhalb dieser Führung wird der radiale Verfahrweg und damit die Position des federbelasteten Kopfsteins 11 auf einen minimalen und einen maximalen Abstand zur Schließzylinderlängsachse 10a begrenzt. Befindet sich der Kopfstein 11 in der Position mit maximalem Abstand zur Schließzylinderlängsachse 10a, dann verlängert das Profil des Kopfsteins 11 die ringsegmentförmige Ausdehnung der Kopfsteinverlängerung 13, und damit verlängert die Kopfsteinkontaktfläche 12a die angrenzende Kopfsteinverlängerungskontaktfläche 14a und die Kopfsteinkontaktfläche 12b die angrenzende Kopfsteinverlängerungskontaktfläche 14b. Durch das Abfallen der vorderen Kopfsteinkontaktfläche 12a wird das Verriegeln beim Entfernen des Schlüssels aus dem Schließzylinder 10 erleichtert und gleichzeitig der Verschleiß minimiert.

Der Kopfstein 11 wird unmittelbar nach Schlüsselabzug in eine Position mit minimalem Abstand zur Schließzylinderlängsachse 10a gebracht. Hiermit wird der Verriegelungsschutz deaktiviert und die Lenksäule drehfest verriegelt. Darauffolgend wird der Kopfstein 11 bei aus dem Schließzylinder 10 abgezogenem Schlüssel in eine Position mit maximalem Abstand zur Schließzylinderlängsachse 10a geführt.

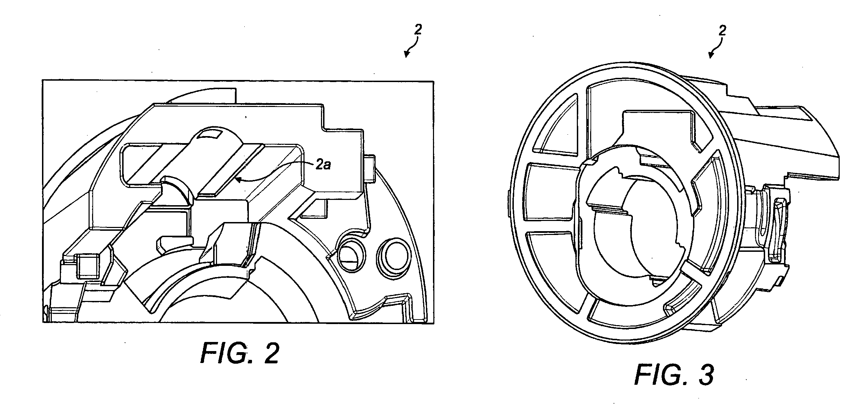

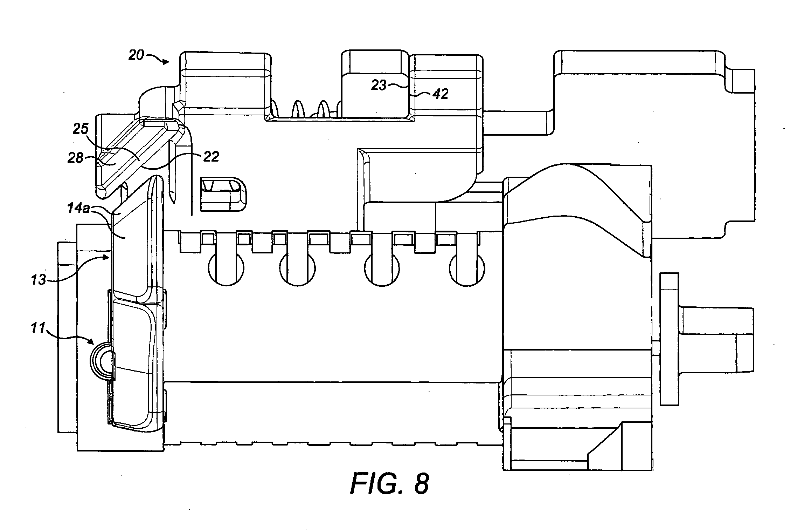

Aus Figur 1 ist eine perspektivische Ansicht des Gegenhalters 20 entnehmbar. In Figur 2 ist die Einbauposition des Gegenhalters 2 in dem Gehäuse detailliert abgebildet. Der Gegenhalter 20 ist in dem Gehäuse 2 in einer Entgegenhalterführung 2a im Wesentlichen längsverschiebbar angeordnet und steuert über die Hubstange 40 die Verriegelung der Lenkverriegelung 1. Des Weiteren ist der Gegenhalter 20 noch Bestandteil des Verriegelungsschutzes. Dabei ist der Gegenhalter 20 als einstückiges Bauteil aus Kunststoff hergestellt. Der schlittenförmige Gegenhalter 20 besitzt auf der Oberseite und den beiden Seiten Führungsflächen, die dem Profil der Entgegenhalterführung 2a entsprechen und somit eine im Wesentlichen spielfreie Bewegung innerhalb der Entgegenhalterführung 2a zur Verfügung stellen. Innerhalb der Führungsflächen ist in einem vorderen Abschnitt eine Federaufnahme 26 zur Aufnahme der Schraubendruckfeder 3 einstückig mit dem Gegenhalter 20 ausgebildet. Diese Federaufnahme 26 erstreckt sich quaderförmig und parallel zu einer Längsachse bzw. Hubachse des Gegenhalters 20. Dabei bildet die Federaufnahme 26 einen dornartigen Vorsprung, der die Schraubendruckfeder 3 radial fixiert. Damit wird der Gegenhalter 20 durch die Schraubendruckfeder 3 nach vorne gedrückt. Stirnseitig weist der Entgegenhalter 20 eine erste Gegenhalterkontaktfläche 21 auf, die als plane Fläche ausgebildet ist und sich im Wesentlichen senkrecht zu der Schließzylinderlängsachse 10a erstreckt. Des Weiteren ist stirnseitig, wie z.B. aus Figur 8 entnehmbar, eine Gegenhalternase 28 integral in dem Gegenhalter 20 ausgebildet.

Die Gegenhalternase 28 weist auf der dem Schließzylinder 10 stirnseitig zugewandten Seite eine Abschrägung 25 auf, die eine zweite Gegenhalterkontaktfläche 22 umfasst. Eine dritte und vierte Gegenhalterkontaktfläche 23, 24 sind in einem hinteren Abschnitt, sich von einer seitlichen Führungsfläche erstreckend, im Wesentlichen parallel zu der ersten Gegenhalterkontaktfläche 21 ausgebildet. Mit dieser geometrischen Ausbildung wird ein Überspringen der Gegenhalternase 28 von der hinteren Kopfsteinverlängerungskontaktfläche 14b auf die vordere Kopfsteinverlängerungskontaktfläche 14a während der Entriegelung verhindert.

Die an ihrer Vorderseite den Gegenhalter 20 abstützende Schraubendruckfeder 3 stützt an ihrer gegenüberliegen Seite die Hubstange 40 ab. Damit wird die spielfreie Bildung entsprechender Kontaktflächenpaare für die Ent- und Verriegelung, bzw. für den Verriegelungsschutz, ermöglicht. Des Weiteren wird durch die Federkraft, kurz vor Erreichen der dritten Raststelle 18, das Überspringen der Gegenhalternase 28 von der hinteren Kopfsteinverlängerungskontaktfläche 14b auf die vordere Kopfsteinverlängerungskontaktfläche 14a, zur Aktivierung des Verriegelungsschutzes, bewirkt.

Die Gegenhalternase 28 ist einstückig mit dem Gegenhalter 20 ausgebildet und ist im Wesentlichen mit parallel verlaufender Ober- und Unterseite flach ausgebildet, wie z.B. aus Figur 1 entnehmbar ist. Im stirnseitigen Bereich ist für die Aufnahme der Schraubendruckfeder 3 eine Schraubendruckfederaufnahme 45 integral mit der Hubstange 40 ausgebildet, vergleichbar mit der Federaufnahme 26 des Gegenhalters 20. Damit die Hubstange 40 bei einer Entriegelung den Gegenhalter 20 über die Schraubendruckfeder 3 drückt und bei einer Verriegelung der Gegenhalter 20 die Hubstange 40 blockiert, sind auch bei der Hubstange 40 planparallele Flächen bzw. Kontaktflächen ausgebildet, die sich im Wesentlichen senkrecht zu einer Hubstangenlängsachse 40a erstrecken. Dabei ist die Hubstange 40 zwischen einer Sperrstellung zur Sperrung einer Lenkspindel und einer Freigabestellung zur Freigabe der Lenkspindel in einer Hubachse beweglich. Eine erste Hubstangenfläche 41 ist angrenzend an die Schraubendruckfederaufnahme 45 in einem vorderen Abschnitt ausgebildet. Diese Fläche verläuft im Wesentlichen parallel zur Hubstangenlängsachse 40a.

In einer ersten U-förmigen Ausnehmung erstrecken sich in der Hubstange 40 eine zweite und eine dritte Hubstangenfläche 42, 43 parallel zur ersten Hubstangenfläche 41. Diese drei Flächen erstrecken sich auf der gleichen Seite der Hubstange 40 und sind im Wesentlichen planparallel. Gegenüber dieser U-förmigen Ausnehmung, also auf der anderen Seite der Hubstange 40, befindet sich eine weitere U-förmige Ausnehmung, in deren Zentrum eine nach unten gebogene bzw. gewölbte Hubnase 46 ausgebildet ist. Die Seitenfläche der Hubnase 46 weist wiederum eine vierte Hubstangenfläche 44 auf. Diese vierte Hubstangenfläche 44 ist im Wesentlichen parallel zu der ersten bis dritten Hubstangenfläche 41, 42, 43 ausgerichtet, weist jedoch abgerundete Kanten auf.

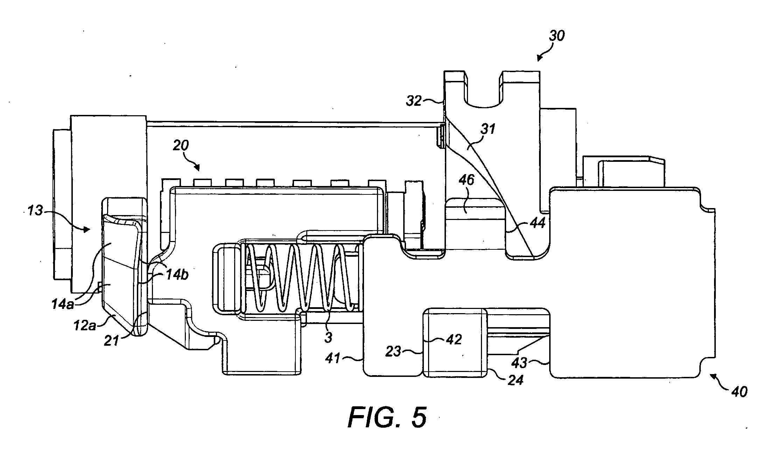

Zur Ansteuerung der Hubstange 40 ist das Nockenrad 30 mit dem Schließzylinder 10 drehfest verbunden, insbesondere mittels einer formschlüssigen Ausgestaltung. Zur Umsetzung der Drehbewegung des Nockenrads 30 in eine translatorische Bewegung der Hubstange 40 weist das Nockenrad 30 eine außen liegende Hubkurve 31 auf, die über die vierte Hubstangenfläche 44 der Hubnase 46 mit der Hubstange 40 beim Entriegeln im Eingriff steht, wobei der Verfahrweg der Hubstange 40 vorzugsweise parallel zur Schließzylinderlängsachse 10a verläuft (vergl. Figur 5). Um den Verschleiß und Reibgeräusche zwischen der Hubkurve des Nockenrads 30 und der Hubkurve 31 zu verringern, weist die vierte Hubstangenfläche 44 vorteilhafterweise abgerundete Kanten auf. Diese Hubkurve 31 ist spiralförmig ausgebildet und geht in ihrem letzten Abschnitt in eine anschließende, ebene Endfläche ohne Steigung über, die als Halteabschnitt 32 bezeichnet wird und zur sicheren Aktivierung des Verriegelungsschutzes dient. Die Hubkurve 31 und der Halteabschnitt 32 erstrecken sich beide an der Außenfläche des Nockenrads 30 und sind integral mit diesem ausgebildet.

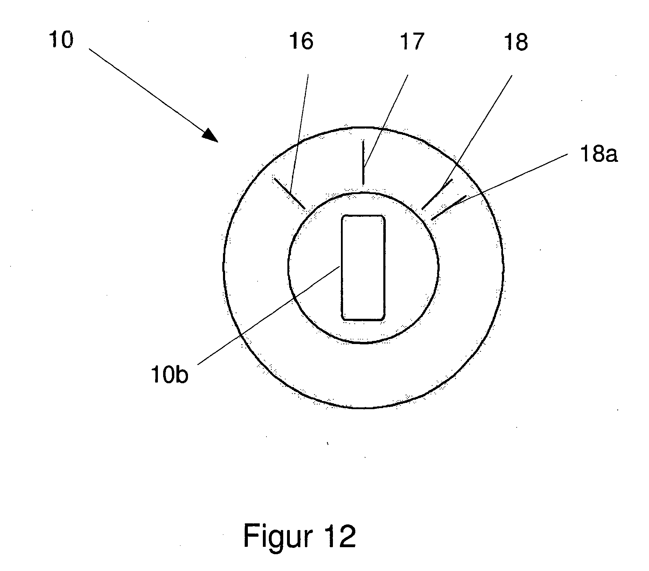

Aus Figur 12 sind schematisch die verschiedenen Rastellen entnehmbar. Schematisch befindet sich der nicht dargestellte Schlüssel in einer ersten Raststelle 16. Dabei wird die erste Raststelle 16 auch als Null-Lage bzw. Ausgangsposition bezeichnet. Hierbei lässt sich der Schlüssel in den Schließzylinder 10 einbringen und entfernen. Es liegt also noch keine Drehung vor und der Drehwinkel des Schließzylinders beträgt 0°. Wird der Schließzylinder von dem Schlüssel in andere Drehstellungen überführt, so ist ein Herausziehen des Schlüssels nicht mehr möglich. Dafür sorgt eine Verriegelungsmechanik. Eine zweite Raststelle 17 wird oft auch als erste Drehlage oder ACC Stellung bezeichnet. Wird der Schlüssel in diese Position mit dem Schließzylinder 10 gedreht, dann wird bereits Strom für die ersten Verbraucher, wie Radio etc., zur Verfügung gestellt. Hierbei beträgt der Drehwinkel des Schließzylinders im Wesentlichen 60°. Schließlich wird eine dritte Raststelle 18 oft auch als zweite Drehlage benannt. Hierbei ist die Lenkverriegelung bereits vollständig entriegelt und der Verriegelungsschutz aktiv. Dabei weist der Drehwinkel im Wesentlichen 120° auf. Des Weiteren ist der Figur 12 noch eine Anlasserbetätigungsposition 18a entnehmbar, deren Drehwinkel im Wesentlichen 155° entspricht.

Nach der Einbringung des Schlüssels in den Schlüsselkanal 10b des Schließzylinders 10 in der ersten Raststelle 16 ist das Kontaktflächenpaar dritte Gegenhalterkontaktfläche 23 und zweite Hubstangenfläche 42 durch die Federkraft der Schraubendruckfeder 3 aneinandergedrückt, die zwischen der Federaufnahme 26 des Gegenhalters 20 und der Schraubendruckfederaufnahme 45 der Hubstange wirkt. Mit Beginn der Drehung des Schlüssels und damit des Schließzylinders 10 beginnt kontinuierlich die Entriegelung der Lenkverriegelung 1.

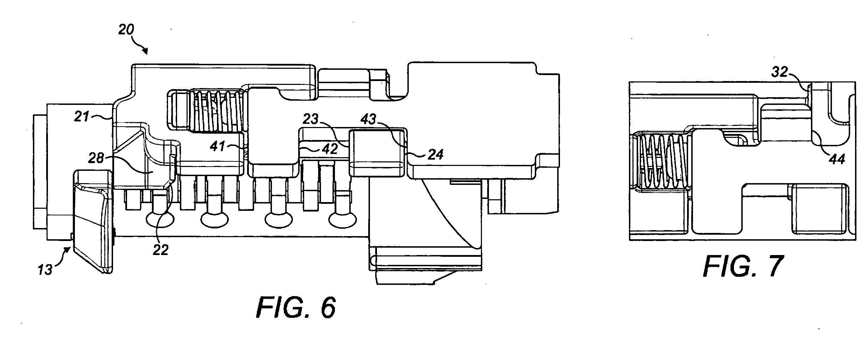

Gleichzeitig greift die Verriegelungsmechanik, die das Entnehmen des Schlüssels aus dem Schließzylinder 10 außerhalb der ersten Raststellung verhindert. Bei der Entriegelung wird das Kontaktflächenpaar dritte Gegenhalterkontaktfläche 23 und zweite Hubstangenfläche 42 weiterhin durch die Federkraft der Schraubendruckfeder 3 aneinandergedrückt. Zusätzlich drückt die Hubkurve 31 auf die vierte Hubstangenfläche 44 und bewegt damit über die Hubnase 46 axial die Hubstange 40. Wie aus Figur 5 ersichtlich, hat die erste Gegenhalterkontaktfläche 21 zusätzlich Kontakt mit der hinteren Kopfsteinverlängerungskontaktfläche 14b bei einem Drehwinkel von ca. 45°. Diese konstante Entriegelung ist bei ca. 85° Drehwinkel und damit vor Erreichen der dritten Raststelle 18 abgeschlossen. Hierbei geht die Hubkurve 31 in den Halteabschnitt 32 des Nockenrads über, der keine Steigung mehr aufweist (vergl. Figur 7).

Bei weiterer Drehung des Schließzylinders 10 bewegt sich der Gegenhalter 20 nach vorne in Richtung Stirnseite des Schließzylinders 10, und kurzzeitig gibt es nur noch Kontakt zwischen dem Halteabschnitt 32 und der vierten Hubstangenfläche 44. Nach Beendigung der Vorwärtsbewegung des Gegenhalters 20 besteht wieder zusätzlich das Kontaktflächenpaar dritte Gegenhalterkontaktfläche 23 und zweite Hubstangenfläche 42, wiederum durch die Federkraft der Schraubendruckfeder 3 aneinandergedrückt (vergl. Figur 8). Während der Vorwärtsbewegung des Gegenhalters 20, wechselt die Gegenhalternase 28 von der hinteren auf die vordere Seite der Kopfsteinverlängerung 13, also von der hinteren Kopfsteinverlängerungskontaktfläche 14b auf die vordere Kopfsteinverlängerungskontaktfläche 14a. Um diesen Wechsel der Gegenhalternase 20 sicherzustellen, wird die Hubstange 40 mittels der vierten Hubstangenfläche 44 durch den Halteabschnitt 32 fixiert, die wiederum über die Schraubendruckfeder 3 den Gegenhalter 20 positioniert. Bis zum Erreichen der dritten Raststelle 18 ist somit die Vorwärtsbewegung bzw. das Umschwenken der Gegenhalternase 28 von der der hinteren Kopfsteinverlängerungskontaktfläche 14b zugewandten Seite auf die der vorderen Kopfsteinverlängerungskontaktfläche 14a zugewandten Seite durchgeführt.

Wird der Schließzylinder weiter Richtung Anlasserbetätigungsposition 18a gedreht, wird die Hubstange 40 mittels der vierten Hubstangenfläche 44 und durch den Halteabschnitt 32 formschlüssig blockiert und damit ein Verriegeln der Lenkspindel verhindert. Wird der Schließzylinder wieder zurück in Richtung erste Rastposition 16 gedreht, dann bildet sich zunächst das Kontaktflächenpaar vordere Kopfsteinverlängerungskontaktfläche 14a und zweite Gegenhalterkontaktfläche 22. Dieses Kontaktflächenpaar blockiert wiederum über das Kontaktflächenpaar dritte Gegenhalterkontaktfläche 23 und zweite Hubstangenfläche 42 die axiale Bewegung der Hubstange 40 und bildet somit den Verriegelungsschutz der Lenkverriegelung. Mit weiterer Drehbewegung des Schließzylinders in Richtung Ausgangsposition wird die vordere Kopfsteinverlängerungskontaktfläche 14a durch die vordere Kopfsteinkontaktfläche 12a ersetzt und bildet zusammen mit der zweiten Gegenhalterkontaktfläche 22 ein weiteres Kontaktflächenpaar. Dieses Kontaktflächenpaar blockiert weiterhin eine Bewegung der Hubstange 40 und bleibt bis zum Erreichen der Ausgangsposition, also der Ersten Raststelle 16, und Entnahme des Schlüssels aus dem Schließzylinder 10 zu mindestens 2/3 des Entnahmeweges, bestehen, und bildet somit einen zuverlässigen Verriegelungsschutz. Nach Entnahme des Schlüssels aus dem Schließzylinder 10 wird der Kopfstein 11 Richtung Schließzylinderachse 10a bewegt. Damit wird die formschlüssige Verbindung bzw. das Kontaktflächenpaar vordere Kopfsteinkontaktfläche 12a und zweite Gegenhalterkontaktfläche 22 aufgelöst und damit ist die Hubstange 40 wieder frei bewegbar. Die Lenkverriegelung sperrt jetzt die Lenkspindel gegen Verdrehung.

Durch die Entkopplung von Ent- und Verriegeln bzw. Ver- und Entriegeln wird hierbei ein größtmöglicher Drehwinkel des Schließzylinders zur Verfügung gestellt, bei gleichzeitig geringem Platzbedarf und hoher Funktionssicherheit.

### Weitere Ausführungsformen

In einer nicht gezeigten abgewandelten Ausführungsform sind für den Kopfstein und/oder dessen Querschnitt auch andere geometrische Formen denkbar. Des Weiteren ist auch eine schwenk- bzw. klappbare Lagerung an bzw. in einem Schließzylinder denkbar.

In weiteren Ausführungsformen ist für ein Zylinderschloss mit drei Raststellungen auch denkbar, dass ein Schlüssel bzw. ein Betätiger des Zylinderschlosses ausgehend mit einer Drehung von einer dritten Raststellung beim Erreichen einer zweiten Raststellung abziehbar bzw. dem Zylinderschloss entnehmbar ist und dennoch die Lenkverriegelung sperrend in die Lenksäule eingreift.

In weiteren Ausführungsformen sind für ein Zylinderschloss mit Haltenase auch andere Herstellungsverfahren wie Spritzguss, Sinterverfahren, als auch andere Werkstoffe wie Verbundwerkstoffe, Kunststoffe, metallische Verbindung etc. denkbar.

Ebenfalls sind für die Herstellung einer Hubstange auch andere Verfahren wie Spritzguss, Sinterverfahren, Stanzen, als auch andere Werkstoffe wie Verbundwerkstoffe, Kunststoffe, metallische Verbindung etc. denkbar.

In einer weiteren Ausführungsform ist für die Herstellung des Gegenhalters 20 ein Druckgussverfahren mit einer Zamak-Legierung, z.B. ZnAl4Cu1 denkbar.

### Bezugszeichenliste

- 1: Lenkverriegelung bzw. Lenkschloss
- 2: Gehäuse
- 2a: Entgegenhalterführung
- 3: Schraubendruckfeder
- 9: Zylindergehäuse
- 10: Schließzylinder
- 10a: Schließzylinderlängsachse
- 10b: Schlüsselkanal
- 11: Kopfstein
- 12a: vordere Kopfsteinkontaktfläche
- 12b: hintere Kopfsteinkontaktfläche
- 13: Kopfsteinverlängerung
- 14a: vordere Kopfsteinverlängerungskontaktfläche
- 14b: hintere Kopfsteinverlängerungskontaktfläche
- 15: Schließzylindergehäuse
- 16: erste Raststelle
- 17: zweite Raststelle
- 18: dritte Raststelle
- 18a: Anlasserbetätigungsposition
- 20: Gegenhalter
- 21: erste Gegenhalterkontaktfläche
- 22: zweite Gegenhalterkontaktfläche
- 23: dritte Gegenhalterkontaktfläche
- 24: vierte Gegenhalterkontaktfläche
- 25: Abschrägung
- 26: Federaufnahme
- 28: Gegenhalternase
- 30: Nockenrad
- 31: Hubkurve
- 32: Halteabschnitt
- 40: Hubstange
- 40a: Hubstangenlängsachse
- 41: erste Hubstangenfläche
- 42: zweite Hubstangenfläche
- 43: dritte Hubstangenfläche
- 44: vierte Hubstangenfläche
- 45: Schraubendruckfederaufnahme
- 46: Hubnase

## Patentansprüche

1. Lenkverriegelung (1) für ein Fahrzeug, welche folgendes aufweist:
einen von einem Schlüssel betätigbaren Schließzylinder (10) mit einem Kopfstein (11),
einen Gegenhalter (20) mit einer Gegenhalternase (28),
ein Nockenrad (30) mit einer auf einer Außenfläche ausgebildeten Hubkurve (31) und
eine Hubstange (40), die zwischen einer Sperrstellung zur Sperrung einer Lenkspindel und einer Freigabestellung zur Freigabe der Lenkspindel in einer Hubachse beweglich ist, **dadurch gekennzeichnet, dass**
für große Drehwinkel des Schließzylinders (10) von mehr als 85°, insbesondere bis zu 155°, eine starre Kopfsteinverlängerung (13) vorgesehen ist, die zusammen mit dem Kopfstein (11) einen Verriegelungsschutz vor Schlüsselabzug bildet.

2. Lenkverriegelung (1) nach Anspruch 1, wobei die Kopfsteinverlängerung (13) mit dem Schließzylinder (10) einstückig oder starr verbunden ist.

3. Lenkverriegelung (1) nach einem der vorhergehenden Ansprüche, wobei die Kopfsteinverlängerung (13) einen Bogenwinkel von mehr als 55° überdeckt.

4. Lenkverriegelung (1) nach einem der vorhergehenden Ansprüche, wobei die Kopfsteinverlängerung (13) einen sich radial erstreckenden, kegel- oder keilförmigen Querschnitt aufweist.

5. Lenkverriegelung (1) nach einem der vorhergehenden Ansprüche, wobei die Kopfsteinverlängerung (13) im Wesentlichen senkrecht zur Schließzylinderachse (10a) angeordnet ist.

6. Lenkverriegelung (1) nach einem der vorhergehenden Ansprüche, wobei die Hubstange (40) beim Entriegeln von dem Nockenrad (30) mit der Hubkurve (31) im Wesentlichen parallel zur Schließzylinderachse (10a) bewegt wird und den Gegenhalter (20) durch eine zwischen der Hubstange (40) und dem Gegenhalter (20) angeordnete Schraubendruckfeder (3) gegen eine hintere Kopfsteinverlängerungskontaktfläche (14b) drückt.

7. Lenkverriegelung (1) nach einem der vorhergehenden Ansprüche, wobei vor dem Erreichen einer dritten Raststelle (18) des Schlüssels eine unabsichtliche Verriegelung durch das Blockieren der Hubstange (40) verhindert wird, in dem die Gegenhalternase (28) des Gegenhalters (20) aufgrund der Druckspannung einer Schraubendruckfeder (3), die von der Hubkurve (31) des Nockenrads (30) über die Hubstange (40) an der Schraubendruckfeder (3) aufgebaut wurde, vor die Kopfsteinverlängerung (13) geschoben wird und beim Verriegeln eine vordere Kopfsteinverlängerungskontaktfläche (14a) gegenüber einer zweiten Kontaktfläche (22) auf der Gegenhalternase (28) zum Liegen kommt.

8. Lenkverriegelung (1) nach einem der vorhergehenden Ansprüche, welche ferner folgendes aufweist:
ein Gehäuse (2), in dem im Wesentlichen der Schließzylinder (10) mit der Kopfsteinverlängerung (13), der Kopfstein (11), der Gegenhalter (20), das Nockenrad (30), die Hubstange (40) und die Schraubendruckfeder (3) angeordnet sind.

## Claims

1. Steering lock (1) for a vehicle, which comprises the following:
- a lock cylinder (10) which can be actuated by a key with a head block (11),
- a counterholder (20) with a counterholder nose part (28),
- a cam wheel (30) with a lifting cam (31) constructed on an external surface, and
- a lifting rod (40) which is movable in a lifting axis between a locking position for locking a steering shaft and a release position for releasing the steering shaft, **characterised in that**
- for large angles of rotation of the lock cylinder (10) of more than 85°, in particular up to 155°, a rigid head block extension (13) is provided which together with the head block (11) forms a locking protection against withdrawal of the key.

2. Steering lock (1) as claimed in Claim 1, wherein the head block extension (13) is integral with or rigidly connected to the lock cylinder (10).

3. Steering lock (1) as claimed in one of the preceding claims, wherein the head block extension (13) covers a bend angle of more than 55°.

4. Steering lock (1) as claimed in one of the preceding claims, wherein the head block extension (13) has a radially extending, conical or wedge-shaped cross-section.

5. Steering lock (1) as claimed in one of the preceding claims, wherein the head block extension (13) is disposed substantially perpendicular to the lock cylinder axis (10a).

6. Steering lock (1) as claimed in one of the preceding claims, wherein during unlocking of the cam wheel (30) with the lifting curve (31) the lifting rod (40) is moved substantially parallel to the lock cylinder axis (10a) and presses the counterholder (20) by means of a helical compression spring (3) disposed between the lifting rod (40) and the counterholder (20) against a rear head block extension contact surface (14b).

7. Steering lock (1) as claimed in one of the preceding claims, wherein before a third latching point (18) of the key is reached an unintentional locking is prevented by blocking of the lifting rod (40), wherein the counterholder nose part (28) of the counterholder (20) is pushed in front of the head block extension (13) due to the compressive stress of a helical compression spring (3) which has been built up on the helical compression spring (3) by the lifting curve (31) of the cam wheel (30) by means of the lifting rod (40) and during locking a front head block extension contact surface (14a) comes to rest opposite a second contact surface (22) on the counterholder nose part (28).

8. Steering lock (1) as claimed in one of the preceding claims, which also has:
- a housing (2) in which essentially the lock cylinder (10) with the head block extension (13), the head block (11), the counterholder (20), the cam wheel (30), the lifting rod (40) and the helical compression spring (3) are disposed.

## Revendications

1. Verrouillage de direction (1) pour un véhicule, présentant :
un cylindre de fermeture (10) avec un bloc de tête (11) actionnable à l'aide d'une clé,
un contre-appui (20) avec une protrusion de contre-appui (28),
une roue à came (30) avec une courbe de levée (31) formée sur une surface extérieure et
une tige de levée (40) qui est mobile entre une position de verrouillage pour bloquer un arbre de direction et une position de libération pour débloquer l'arbre de direction dans un axe de levée,
**caractérisé en ce que**
pour de grands angles de rotation du cylindre de fermeture (10) supérieurs à 85°, en particulier jusqu'à 155°, un prolongement rigide du bloc de tête (13) est prévu qui forme une protection de verrouillage avant le retrait de la clé conjointement avec le bloc de tête (11).

2. Verrouillage de direction (1) selon la revendication 1, où le prolongement du bloc de tête (13) est relié de façon rigide ou intégrale avec le cylindre de fermeture (10).

3. Verrouillage de direction (1) selon l'une des revendications précédentes, où le prolongement du bloc de tête (13) recouvre un arc d'angle de plus de 55°.

4. Verrouillage de direction (1) selon l'une des revendications précédentes, où le prolongement du bloc de tête (13) présente une section s'étendant radialement de forme conique ou en forme de coin.

5. Verrouillage de direction (1) selon l'une des revendications précédentes, où le prolongement du bloc de tête (13) est agencé pour l'essentiel perpendiculairement à l'axe du cylindre de fermeture (10a).

6. Verrouillage de direction (1) selon l'une des revendications précédentes, où la tige de levée (40) est déplacée essentiellement parallèlement à l'axe du cylindre de fermeture (10a) lors du déverrouillage de la roue à came (30) selon la courbe de levée (31) et appuie contre une surface de contact arrière du prolongement du bloc de tête (14b) au moyen d'un ressort hélicoïdal de compression (3) agencé entre la tige de levée (40) et le contre-appui (20).

7. Verrouillage de direction (1) selon l'une des revendications précédentes, où un verrouillage non intentionné avant l'atteinte d'une troisième position d'encliquetage (18) de la clé est empêché par le blocage de la tige de levée (40) en ce que la protrusion (28) du contre-appui (20) est poussée devant le prolongement du bloc de tête (13) en raison de la tension de compression d'un ressort hélicoïdal de compression (3) qui a été établie de la ligne de levée (31) de la roue à came (30) par la tige de levée (40) sur le ressort hélicoïdal de compression (3) et où une surface de contact avant du prolongement du bloc de tête (14a) s'arrête lors du verrouillage en face d'une seconde surface de contact (22) sur la protrusion du contre-appui (28).

8. Verrouillage de direction (1) selon l'une des revendications précédentes présentant de plus :
une enceinte (2) dans laquelle sont agencés essentiellement le cylindre de fermeture (10) avec le prolongement du bloc de tête (13), le bloc de tête (11), le contre-appui (20), la roue à came (30), la tige de levée (40) et le ressort hélicoïdal de compression (3).
